(19) Europäisches Patentamt

European Patent Office

Office européen des brevets

(11) **EP 2 344 995 B1**

(12) **EUROPEAN PATENT SPECIFICATION**

(45) Date of publication and mention
of the grant of the patent:
**02.04.2014 Bulletin 2014/14**

(21) Application number: **09817303.2**

(22) Date of filing: **02.10.2009**

(51) Int Cl.:
***G06Q 30/00*** *(2012.01)* ***G07F 7/08*** *(2006.01)*
***G06F 21/00*** *(2013.01)*

(86) International application number:
**PCT/EP2009/062859**

(87) International publication number:
**WO 2010/037863 (08.04.2010 Gazette 2010/14)**

(54) **VALUE MANAGEMENT METHOD IN A PREPAID DEVICE**

METHODE ZUM VERWALTEN EINES WERTES IN EINER PREPAID-VORRICHTUNG

PROCÉDÉ DE GESTION DE VALEURS DANS UN DISPOSITIF PRÉPAYÉ

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **02.10.2008 EP 08165670**

(43) Date of publication of application:
**20.07.2011 Bulletin 2011/29**

(73) Proprietor: **Nagravision S.A.
1033 Cheseaux-sur-Lausanne (CH)**

(72) Inventor: **KUDELSKI, Henri
CH-1071 Chexbres (CH)**

(74) Representative: **Leman Consulting S.A.
Chemin de Précossy 31
1260 Nyon (CH)**

(56) References cited:
**WO-A-03/085959**

**Description**

**Introduction**

The present invention concerns the prepaid service distribution field, particularly toll television services.

**State of the Art**

Audio-visual services are transmitted in the form of a data stream bound for receivers, either fixed receivers (set-top-box) or mobile. As an example of such a data stream, we include services for stock market information, weather, general television, a sporting event and so on. This content may be broadcast to user units such as a pay-TV decoder, a computer, a portable telephone, a "palm-top", a PDA, a radio, a television, a multimedia terminal.

The digital data stream is encrypted in order to manage the use and define the conditions for such use. This encryption is accomplished thanks to control words that are changed at regular intervals (between 5 and 30 seconds) in order to deter any attack aimed at discovering a control word.

In order for the user unit to be able to decrypt the data stream encrypted by a control word, this control word is sent separate from the data stream in a control message (ECM) encrypted by a key unique to the transmission system between the administration center (CAS) and the security module for the user unit. Indeed, the security operations are done in a security module (SC) that is generally in the form of a smartcard, reputed to be tamper-proof. This module is removable from the user unit and treats the signals relating to the receiver rights.

Upon decryption of the control message (ECM), verification takes place in the security module (SC) as to the presence of a right to access a particular data stream. The control word is only returned in the decrypted form to the user unit if the comparison is positive.

This right may be managed by authorization messages (EMM) that load such a right into the unit (SC). Other possibilities are equally possible such as the sending of the decryption keys.

Nowadays, the accounting related to the use of such content is done on a subscription basis, a basis of purchase by event or a basis of payment per unit of time.

Subscription allows for the definition of a right associated with one or more broadcast channels and allows the user to receive these decrypted channels if the right is present in his security module.

Likewise, it is possible to define the particular rights for a content, such as a movie or a soccer game. The user can obtain this right (purchase, for example) and the content will be specifically managed by this right. This method is known under the name of "pay-per-view" (PPV).

Concerning payment per unit of time, the security module includes a credit which is debited according to the actual consumption by the user. Thus, for example, a unit will be debited each minute from this credit regardless of which channel is watched. It is possible, according to the technical implementations, to vary the counting unit, either in the length or in the value of the time allocated, or by combining these two parameters to adapt the billing to the type of product transmitted.

Concerning the value cards, that is, those which include, in addition to the access control functions, a credit that may be freely attributed to a content selected by the user. For reasons of security and financial management, these value cards have an expiry date after which they no longer function.

Thus, after the expiry date, these cards may still have a non-negligible credit for which the user may claim a reimbursement, either in the form of cash or credit on a new card.

The fact that reimbursement is possible with these value cards makes them very attractive for malicious third parties looking to eliminate any debits from the card in order to obtain a reimbursement for all or part of the audio/video content already consumed.

International Patent Application Publication number 03/085959 A describes a system for reloading credit onto a prepaid card. In order to reload the credit, the user has to prove that he has the right to have the credit loaded - i.e. that he has actually purchased more credit. To facilitate this, the prepaid card has a unique identifier and a code. To reload credit, the user has to contact a management centre and send his credit card number and the amount to be reloaded. If the credit card number is correct and authorisation is received, then the credit is deducted from the credit card account and the equivalent amount loaded onto the prepaid card. This document does not address the problem of dealing with fraudulent claims for refund of a balance of credit from the management centre when the user wants to stop using the card and recover the balance.

Brief Description of the Invention

The goal of the present invention is to secure a prepaid device for access to audio/video content having the possibility of reimbursement of the unused balance upon presentation of the aforementioned device to a control center.

This goal is achieved by a method for managing a debit value (V1) in a prepaid device and comprising an identifier (UA) specific to each device and a control value (CT), this method comprising the following steps:

- receiving of a request to modify the debit value (V1) by an amount (M),

- calculating a new debit value (V1') after the modification of the debit value (V1) by the amount (M),

- determining a positive whole number or zero of steps (N) according to a function expressing the modification of the new debit value (V1') relative to the debit value (V1),

- if the number of steps (N) is non-zero, modifying the control value (CT) by executing at least one one-way function on said control value (CT) a number of times equal to the number of steps (N).

Of course, this method is applied in addition to the verification of the current debit value to be sure that the amount of the purchase (M) is sufficient for the requested operation and in addition to the verification to check that the debit value has not been modified.

Regarding the verification for sufficient funds: the debit value (V1) represents the current debit of the device and before modifying the control value, the remaining credit (V0-V1+M) is verified to make sure it will cover the purchase (the current debit increasing with each purchase to arrive at the initial credit value). The right associated with the amount (M) is refused if the remaining credit is insufficient and the prepaid device will refuse to restore the keys necessary for access to the associated audio/video contents.

Thus, the present invention suggests using characteristics of a one-way function to change a control value in such a way as to make any return to a previous control value impossible. At each new calculation of this control value, the old value is replaced by the new one.

In the framework of the invention, this one-way function is a mathematical mapping H of a source subset towards an object subset in which each element x of the source subset is mapped to a target H(x). These functions are particularly useful when they are of type known as Hash functions, such as defined on page 27 of the work RSA Laboratories' Frequently Asked Questions About Today's Cryptography, v4.0. The element x can be any length but H(x) is always a fixed-length string. Such functions are difficult to reverse, that is to say that knowing H(x) does not in general allow for the deduction of x. Additionally, as a one-to-one function it is collision-free, that is if $H(y) = H(x)$, then necessarily, y=x, and if $H(y) \neq H(x)$, then necessarily, $y \neq x$.

By function expressing the modification of the new value relative to its previous state, we include a function that divides the entire initial credit value (V0) into a plurality of steps according to a linear or non-linear function, or even an arbitrary defined via a table, and thereby defining an interval. At each passing of an interval during the change of the debit value (V1), at least one one-way function is applied to the control value (CT).

We can arbitrarily decide to make more than one iteration on the control value (CT) at each loop. We can thus make two iterations for each loop passed.

An important point is the principle of verification a posteriori by an administration center. This center will read the unique number (UA) and, from this number, will be able to find in its database the initialization parameters for the prepaid device. These initialization parameters are at least the initial value (V0) of device and the initial control value (CT0). Other parameters such as the interval function can be determined in the case where the devices would have different functions. The other important parameter is the value (V1) which represents the current debit and which must be verified. The predefined function (F) allows the administration center to determine how many intervals have been crossed, or steps (N), to arrive at the value of the current debit (V1) and that corresponds to the total number of one-way functions applied to the control value (CT). Knowing the initial control value, the administration center can calculate the final control value which should be associated with this value (V1) and compare it with the control value that is stored in the prepaid device.

The term "debit value" or "credit value" can be interpreted as monetary values or can also encompass credit or debit units, each unit representing an authorization to watch a broadcast event during a predefined time. A broadcast event can consume 10 units although another event needs 15 units. The viewing of broadcast event can be managed according to a payment per time unit, e.g. 1 unit for 10 minutes, each time the 10 minutes is over, another unit is decremented allowing a further 10 minutes of authorization.

## Brief Description of the Figures

The invention will be better understood thanks to the detailed description that follows and to which the annexed drawings refer, these being given as a nonlimiting example, namely:

- Figure 1 illustrates the flow chart of one of the execution modes for the invention.

- Figure 2 illustrates the prepaid device in the two operations mode, i.e. the payment and the verification.

**Detailed Description**

Each card or prepaid device can be supplied to the client in different forms. Although the most known form is the ISO 7816 smartcard, this device may take other forms such as PCMCIA card, RFID or USB dongle, the interface to which may be electrical or contactless.

At the time of initialization of such a device, different values are stored, namely an identification number (UA), a control value (CT) and an initial credit value (V0). The current debit value (V1) is initialized at zero. The device is now ready to use.

When it is inserted in a decoder, this device receives security messages coming from an administration center. These messages can come via a DVB-T, DVB-H data stream or via the mobile GSM network by SMS. The credit contained in the device can be used in different ways, either by consumption according to time or by purchase for one or several contents.

The audio/video data stream is accompanied by control messages (ECM) that describe the right or rights necessary for access to the mentioned data streams. In the case of a data stream accessed per unit of time, the prepaid device consumes a unit of time (which can vary from one content to another) thus opening an authorization period. We are now speaking about temporary right linked to a time unit. According to the implementation of the invention, this temporary right may be specific to a channel or to several channels. In the first case, a change of channel terminates the authorization to the content and a new temporary right, specific to the new channel must be acquired.

The user can also buy content suggested via the electronic program guide, this purchase, on one hand decreases the credit in the device and, on the other hand, creates a right stored in the mentioned device, a right relative to the mentioned content. This content may be an event (movie, game, etc.), a series of events (a soccer season, a television series) or one (or several) television channels for a given duration ("Discovery" channel for 2 months, a package of "Sports" channels).

The fact that the right is present in the device authorizes the latter to transmit the key or keys to the decoder to which it is connected.

Two methods are used for credit management in such a device, either by subtraction or by addition.

In the first case, a device containing a credit of 200 Euros will see this value decrease for each consumption. The initial credit is the debit value, the value that will be decreased at each purchase. Once the debit value is at zero, no right is created and the device ceases to transmit the keys to the decoder.

In the second case, an initial credit value of 200 Euros is stored as well as a debit value. This debit value is initially at zero and increases with each purchase. Once the debit value reaches the value of the initial credit, the device ceases to return the keys to the decoder.

It is known that such a device is identified by a unique number (UA). An administration center stores the identification (UA) for each device with the initial credit value.

In addition to that, such a device will contain a control value (CT) that, preferably, is specific to each device. The administration center will also store this value with the device identification. Thanks to this control value (CT), the remaining credit value will be verifiable in a reliable manner.

The process is the following, taking the example of a fixed credit value (initial credit) and an increasing debit value (see example above).

According to our example, the initial credit value is 200 Euros and the debit value (V1) before the purchase is 10.5 Euros. The purchase initiated by the user is an amount M of 2.8 Euros for a televised event.

The function is, for example, a logarithmic function:

$$Y = 10 \log(x) + 3$$

Current Value V1: 10.5          $Y1 = 13.212$
Final Value V1': 13.3          $Y1' = 14.238$
Absolute Difference in Values N: 1     i.e. $\lfloor Y1' \rfloor - \lfloor Y1 \rfloor$

The absolute difference in values (N) is known as the number of steps.

Consequently, the control value will be subject to only one one-way function. In the case that the difference is zero, no modification is made to the control value (CT).

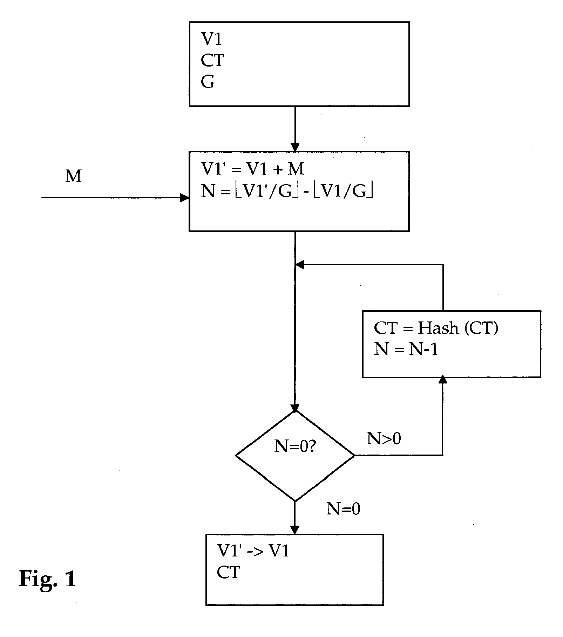

Other functions, such as division may be used. The flow chart from figure 1 corresponds to this example.

In the example illustrated in the flowchart it was arranged for the interval causing a modification of the control value, or the granularity (G), to be 1 Euro.

Current Value V1: 10.5          Granularity (G): 1

Final Value V1': 13.3

Absolute Difference in Values $N = V1'/G - V1/G$    i.e. $\lfloor 13.3/1 \rfloor - \lfloor 10.5/1 \rfloor = 3$

We only keep the whole part of the division (quotient) to calculate the difference between these two divisions.

Thus, the control value will be modified 3 times by a one-way function $CT = Hash(Hash(Hash(CT)))$. Three iterations of this one-way function will be performed, the following one-way function being applied to the result of the preceding one-way function.

The final control value (CT) will be stored with the new debit value, which is 13.3.

According to an alternative execution mode, the quotient for the division $\lfloor 13.3/1 \rfloor$ representing the total number of times that the one-way function has been applied is kept in memory with the control value in order to not redo this calculation at the time of the next debit.

We can thus consider that each value $V = \lfloor V1/G \rfloor$ is associated with a control value (CT), which is specific by device, i.e. each device contains a different control value or repeated rarely into the population of prepaid devices.

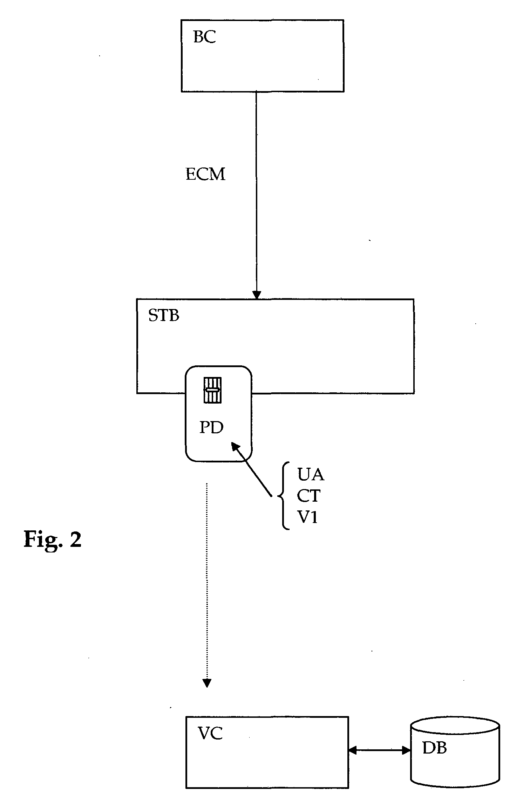

The figure 2 shows the prepaid device PD ready to be inserted into the set-to-box STB. This example shows an embodiment with an ISO 7816 type card which is a know format for such application. The set-top-box STB receives broadcast data from the broadcast center BC, which can transmit the data in various ways such as through satellite, cable, Internet. The set-top-box STB send request to decrement the debit value V1, the result being stored into the prepaid device PD. A request can be related to an event having an identifier EV1. The request sent to the prepaid device contains the amount M, the event identifier EV1. If the prepaid device contains enough credit to cover this purchase, the purchase is accepted and the debit value V1 is updated taking into account the amount M. A temporary right is created containing the event identifier EV1. From no on, the control messages ECM containing the event identifier are accepted, decrypted and the corresponding control word returned to the set-top-box. An expiration date can be generated and associated to the event identifier allowing the prepaid device to cancel this authorization when the expiration date is reached.

During verification of the device by the administration center VC, for example, for a reimbursement request of the unused value of the credit, the device transmits at least its identification number (UA), the debit value (V1) and the control value (CT). Thanks to the device's identifier, (UA) the center will search for the initial control value (CT0) in its database DB. On the basis of the debit value, in this case 13.3 Euros, the administration center simply has to perform the one-way function 13 times on the initial control value (CT0). The comparison between the value thus calculated and the control value received from the device makes it possible to determine with certainty if the debit value indicated by the device is correct (for the absolute part which is 13 Euros). In the case that the calculated control value does not correspond to the value received by the device, this device is considered as corrupted and measures will be taken according to the operator's policy.

It should be noted that the change in the state of the debit value that triggers the modification of the control value (CT) may be different according to the implementation of the invention. It is possible to modify the control value with each change of 0.5 Euros with represents the granularity G, for example. In this case, at the time of verification, the debit value will be divided by the granularity (G) and the quotient will indicate the number of times that the one-way function has been applied to the control value (CT).

Another method of calculating the number of steps (N) to be performed is based on the purchase amount (M). A remainder (R) is initialized at zero at the time of initialization of the prepaid device.

The value of the number of steps (N) is equal to: $N = \lfloor (M+R)/G \rfloor$ G being the chosen granularity. The remainder resulting from the division is memorized in R.

The entire part of the division gives the number of steps (N), the remainder being used at the time of the next operation modifying the value of the prepaid device.

If a purchase is made for 2.30, the granularity being fixed at 0.5 and the remainder value being zero, the number of steps $N = \lfloor (2.3+0)/0.5 \rfloor = 4$, the remainder being 0.3. A new purchase with a value of 2.3 gives us: $N = \lfloor (2.3+0.3)/0.5 \rfloor = 5$, the remainder being 0.1.

In an alternative mode for the invention, a marker (MK) is initialized in the prepaid device with the other data mentioned above. The marker is initialized at the value of the granularity G. The value of this marker corresponds to the first modification threshold for the control value (CT).

In our example of a credit value of 200 € and a debit value at zero, if the granularity is 1€, the marker value will be 1€. The marker (MK) will serve as a comparison value with the debit value and if this value is greater than or equal to the marker value, an iteration on the control value (CT) is performed (CT' = Hash (CT)). The new control value (CT') replaces the old value (CT).

Once done, the marker is increased by the value of the granularity (G) and will be equal to 2€.

The comparison step with the debit value is re-done and if the marker is less than the debit value, a new iteration on the control value (CT) is performed, followed by the increase of the marker value by the granularity.

This loop stops when the marker value is greater than the debit value. This has the effect that a number of iterations on the control value have been performed, that number corresponding to the number of times that the granularity (G) is contained in the difference between the marker value at the beginning of the processing and the final debit value.

In a particular mode specific of the invention, the marker value (MK) is not used for the comparison with the debit value, but rather a value extracted from a table (TB) by the marker (MK). This makes it possible to define any function in its progression. The values in the table can be anything, but preferably adhering to the definition of increasing monotonic.

| P1 | 1 |
| P2 | 3 |
| P4 | 7 |
| P5 | 9 |
| P6 | 12 |

The table positions are referenced P1 to P6. The marker (MK) makes it possible to point to the first position at the time of the initialization (MK=1) and for each time that an iteration on the control value is performed, the marker is updated to point to the next position (MK = MK +1).

The value indicated "1" for the first position is compared to the debit value. Once this value "1" is reached by the debit value, an iteration is performed on the control value and the marker is updated to point at position P2.

If the indicated value in the table is always less than the debit value, a new iteration is performed with the updating of the marker until this value contained in the table is greater than the debit value.

We see here that it is not forbidden to place a value in the table that will not be increasing. We use the example of the position P5 that would have a value of "3". This has the effect that as soon as the debit value exceeds "7", we will perform at least 2 iterations because the test on the following pointed value will inevitably be less and will thus directly increase the marker to position P6. It suffices that the function for the table is known to the administration center for the verification to be achievable.

We can imagine that the table would be different according to the prepaid device. This would be one of the initialization variables for such a device. The result is that the number of iterations can be different between one device and another according to the table values even though the debit value would be the same for the two devices.

It is equally conceivable that the device initializes the table values itself. An average graduation of 2 is defined, for example, and the device will generate a random number between 0 and 4, the result being added to the previous table value. This operation is repeated until the table is filled. At the time of verification, the table is transmitted to the administration center that could reproduce the verification operation and establish the number of iterations that the control value has been performed upon.

The prepaid device can also contain some verification mechanisms to forbid the modification of the debit value by glitch attack or power supply variation for example. Regarding the verification of the authenticity of the debit value: the following description is given by way of example of how such a verification is commonly carried out in the state of the art. On one hand, the debit value encrypted under a first key is stored in the prepaid device. On the other hand a modified version of the debit value is encrypted under a second key and stored in the prepaid card. By modified version it is meant any of several operations performed on the debit value such as an EXOR of the debit value, resulting for example in an inversion or convenient complement of the credit value. The first and second keys are stored in the prepaid card and each time a debit is to be executed, the prepaid card decrypts both values, applies the inverse function on the decrypted value by the second key and compares the results. In case that the results are not equal, the debit value is considered compromised and the operation is stopped.

Instead of encrypting the debit value, a signature on this value can be calculated and stored in the prepaid device. The signature is verified each time an attempt to modify the debit value is received.

According to a simplified invention mode, and insomuch as the products to purchase by the credit contained in the device would be within a limited range, it is possible to perform a modification of the control value at the time of each purchase. Let us take the example of a product offer to purchase consisting of between 2.5 and 5 Euros. The administration center, at the time of verification, would be able to calculate the number of one-way functions between the initial value (CT0) and the value (CT) read from the device. For each one-way operation, the center compares the result with the control value (CT). When the two values are identical, the number X of performed functions is therefore equal to X purchases minimum and therefore we can determine the minimal value of the debit value by multiplying X by 2.5 (minimal price). If the debit value shown is less, the device is corrupted and the center would be able to take the necessary measures.

In this execution mode, the lower the price range for the offers, the more the verification is reliable.

The same verification principle can be applied to a date. This mechanism on the date can be applied with or without the verification of the debit value. The device receives information about the date in the messages addressed to it. This date is considered as the new date to be taking into account and aims at updating the current date. An authorization message, in addition to the right that it contains, or even a price, contains a field indicating the time, which can take one of numerous forms. For example, the most known is in the format of day/month/year, or simply, as a counter unique to the broadcast system and varying in a linear fashion. The device will contain, at the time of the initialization, an initial date and a second control value (CTD0). This second control value, like the first, is preferably unique to each device.

In the same way as for the debit value, we decide on a unit of change or a graduation (for instance, the time) which triggers the execution of the one-way function. At the time the message is received, the device calculates a second whole number of steps (P) corresponding to the number of graduations crossed between the new date and the previously memorized date (current date). At the same time as the storing of the new date, it performs a number of one-way functions on the second control value equal to the number of steps (P) previously determined. This second control value will be able to serve to authenticate transactions.

During a transaction, for instance, the purchase of a televised event, we save the date of the purchase in the prepaid device, an identifier for the event and a verification value. This verification value is the result of a second one-way function from the second control value (CTD). It should be noted that this second one-way function could be different type (for example, initialized by a specific key) that the one-way function applied to the second control value (CTD) during the date change.

Thus, if an authentication must be made for the purchase of such an event a posteriori, the administration center will be able to read the date of purchase for the event and calculate the second control value (CTD'). This thanks to the identifier from the value card which allows it to find the second initial control value (CTD0) and the initial date in its database. Thanks to the event date, the number of one-way functions is calculated and applied to the second control value (CTD). Once this control value (CTD') is calculated, it applies the second one-way function to obtain the reference value which will be compared with that CTD which is in the prepaid device. If the comparison is positive, this means that the date is authentic.

**Claims**

1.   Method for managing a debit value (V1) in a prepaid device comprising an identifier (UA) specific to each device and a control value (CT), this method comprising the following steps:

   - receiving a request to modify the debit value (V1) by an amount (M),
   - calculating a new debit value (V1') by modifying the debit value (V1) by the amount (M),
   - expressing the modification of the new debit value (V1') relative to the debit value (V1) in terms of a predefined function, to give a non-negative integer number of steps (N),
   - if the number of steps (N) is non-zero, calculating a new control value (CT') to replace the control value (CT) by executing at least one one-way function on said control value (CT) a number of times equal to the number of steps (N).

2.   Method according to claim 1, wherein the prepaid device represents an initial credit value (V0), said initial credit value being divided into a plurality of intervals, the number of steps (N) being determined by the number of intervals crossed by the modification of the debit value (V1).

3.   Method according to claim 1 or 2, wherein the function is a division between the debit value (V1) and the new debit value (V1') by a granularity (G) representing a unit value for one step, the number of steps N being calculated according to the formula:

   N = V1'/G- V1/G, the result of each division keeping only the whole part.

4. Method according to claim 2, wherein the prepaid device comprises a remainder value (R) and a granularity (G) representing a unit value for one step, the number of steps (N) being calculated:

N = (M+R) / G; the result of the division only keeping the whole part, the remainder being memorized as the new remainder value (R).

5. Method according to claim 3, wherein the result of the division V1'/G is stored with the new value (V1') in order to avoid having to recalculate at the next request to modify the debit value

6. Method for managing a date (D1) in a prepaid device comprising an identifier (UA) specific to each device and a second control value (CTD) relating to an initial date (D0), this method including the following steps:

- receiving a request to modify the current date (D1) by a new date (D1'),
- expressing the modification of the current date (D1) relative to the new date (D1') in terms of a predefined function, to give a non-negative integer second number of steps (P),
- modifying the second control value (CTD) by the execution of a one-way function on said control value (CTD) a number of times equal to the second number of steps (P)

7. Prepaid device comprising a unique number (UA) and a debit value (V1), means to modify the debit value (V1) by an amount (M) in order to obtain a new debit value (V1'), the prepaid device **characterised in that** it further comprises:

a specific control value (CT),
calculation means to express the modification of the new debit value (V1') relative to the debit value (V1) in terms of a predefined function to give a non-negative integer number of steps (N), and
control means to modify the control value (CT) by executing at least one one-way function on said control value (CT) a number of times equal to the number of steps (N) when the number of steps (N) is non-zero.

8. Prepaid device of claim 7, **characterized in that** the prepaid device represents an initial credit value (V0), said initial credit value being divided into a plurality of intervals, the number of steps (N) being calculated by the number of intervals crossed by the modification of the debit value (V1).

9. Prepaid device of claims 7 or 8, **characterized in that** the function is a division between the debit value (V1) and the new debit value (V1') by a granularity (G) representing a unit value for one step, the number of steps N being calculated according to the formula:

N = V1'/G - V1/G, the result of each division keeping only the whole part.

10. Prepaid device according to claim 8, **characterized in that** the prepaid device comprises a remainder value (R) and a granularity (G) representing a unit value for one step, the number of steps (N) being calculated:

N = (M+R) / G; the result of the division only keeping the whole part, the remainder being memorized as the new remainder value (R).

**Patentansprüche**

1. Verfahren zum Verwalten eines Lastschriftwerts (V1) in einer Prepaid-Vorrichtung mit einer spezifischen Kennung (UA) für jede Vorrichtung und einem Kontrollwert (CT), mit den folgenden Phasen:

- Empfang einer Anfrage, den Lastschriftwert (V1) um einen Betrag (M) abzuändern,
- Berechnung eines neuen Lastschriftwerts (V1'), indem man den Lastschriftwert (V1) um den Betrag (M) abändert,
- Ausdrücken der Änderung des neuen Lastschriftwerts (V1') im Vergleich zu dem Lastschriftwert (V1) in Bezug auf eine vorherbestimmte Funktion, um eine nicht-negative ganze Zahl von Phasen (N) zu erhalten,
- wenn die Zahl der Phasen (N) nicht Null ist, Berechnung eines neuen Kontrollwerts (CT'), der den Kontrollwert (CT) ersetzt, mittels mindestens einer Einwegfunktion auf besagtem Kontrollwert (CT) so viele Male wie die Zahl der Phasen (N) beträgt.

2. Verfahren nach Anspruch 1, wobei die Prepaid-Vorrichtung einen anfänglichen Kreditwert (V0) zeigt, wobei besagter anfänglicher Kreditwert in eine Vielzahl von Abständen unterteilt ist, wobei die Zahl der Phasen (N) von der Zahl der Abstände bestimmt wird, die durch die Änderung des Lastschriftwerts (V1) durchquert werden.

3. Verfahren nach Anspruch 1 oder 2, wobei die Funktion eine Division zwischen dem Lastschriftwert (V1) und dem neuen Lastschriftwert (V1') durch eine Granularität (G) ist, die einen Einheitswert für eine Phase darstellt, wobei die Zahl der Phasen N gemäß folgender Formel berechnet wird:

N = V1'/G - V1/G, wobei das Ergebnis jeder Division nur den ganzen Teil beibehält.

4. Verfahren nach Anspruch 2, wobei die Prepaid-Vorrichtung einen Restwert (R) umfasst und eine Granularität (G), die einen Einheitswert für eine Phase darstellt, wobei die Zahl der Phasen (N) wie folgt berechnet wird:

N = (M+R) / G; das Ergebnis der Division behält nur den ganzen Teil bei, wobei der Rest als der neue Restwert (R) gespeichert wird.

5. Verfahren nach Anspruch 3, wobei das Ergebnis der Division V1'/G mit dem neuen Wert (V1') gespeichert wird, um nicht bei der nächsten Anfrage nachrechnen zu müssen, um den Lastschriftwert abzuändern.

6. Verfahren zum Verwalten eines Datums (D1) in einer Prepaid-Vorrichtung mit einer spezifischen Kennung (UA) für jede Vorrichtung und einem zweiten Kontrollwert (CTD) mit Bezug auf ein Anfangsdatum (D0), wobei dieses Verfahren die folgenden Phasen umfasst:

- Empfang einer Anfrage, das aktuelle Datum (D1) um ein neues Datum (D1') abzuändern,
- Ausdrücken der Änderung des aktuellen Datums (D1) im Vergleich zu dem neuen Datum (D1') in Bezug auf eine vorherbestimmte Funktion, um eine nicht-negative ganze zweite Zahl der Phasen (P) zu erhalten,
- Abänderung des zweiten Kontrollwerts (CTD) durch die Ausführung einer Einwegfunktion auf besagtem Kontrollwert (CTD) so viele Male wie die zweite Zahl der Phasen (P) beträgt.

7. Prepaid-Vorrichtung mit einer unverwechselbaren Zahl (UA) und einem Lastschriftwert (V1), Mitteln zur Abänderung des Lastschriftwerts (V1) um einen Betrag (M), um einen neuen Lastschriftwert (V1') zu erhalten, wobei die Prepaid-Vorrichtung **dadurch gekennzeichnet ist, dass** sie des weiteren umfasst:

einen spezifischen Kontrollwert (CT),
Berechnungsmittel, um die Änderung des neuen Lastschriftwerts (V1') im Vergleich zu dem Lastschriftwert (V1) in Bezug auf eine vorherbestimmte Funktion auszudrücken, um eine nicht-negative ganze Zahl von Phasen (N) zu erhalten, und
Steuermittel, um den Kontrollwert (CT) mittels mindestens einer Einwegfunktion auf besagtem Kontrollwert (CT) so viele Male abzuändern, wie die Zahl der Phasen (N) beträgt, wenn die Zahl der Phasen (N) nicht Null ist.

8. Prepaid-Vorrichtung nach Anspruch 7, **gekennzeichnet dadurch, dass** die Prepaid-Vorrichtung einen anfänglichen Kreditwert (V0) anzeigt, wobei besagter anfänglicher Kreditwert in eine Vielzahl von Abständen unterteilt wird, wobei die Zahl der Phasen (N) durch die Zahl der Abstände berechnet wird. die durch die Änderung des Lastschriftwerts (V1) durchquert werden.

9. Prepaid-Vorrichtung nach den Ansprüchen 7 oder 8, **gekennzeichnet dadurch dass** die Funktion eine Division zwischen dem Lastschriftwert (V1) und dem neuen Lastschriftwert (V1') durch eine Granularität (G) ist, die einen Einheitswert für eine Phase darstellt, wobei die Zahl der Phasen N gemäß folgender Formel berechnet wird:

N = V1'/G - V1/G, das Ergebnis jeder Division behält nur den ganzen Teil bei.

10. Prepaid-Vorrichtung nach Anspruch 8, **gekennzeichnet dadurch, dass** die Prepaid-Vorrichtung einen Restwert (R) umfasst und eine Granularität (G), die einen Einheitswert für eine Phase darstellt, wobei die Zahl der Phasen (N) wie folgt berechnet wird:

N = (M+R) / G; das Ergebnis der Division behält nur den ganzen Teil bei, wobei der Rest als der neue Restwert (R) gespeichert wird.

**Revendications**

1. Méthode de gestion d'une valeur de débit (V1) dans un dispositif à prépaiement comprenant un identifiant (UA) propre à chaque dispositif et une valeur de contrôle (CT), cette méthode comprenant les étapes suivantes :

   - réception d'une requête pour modifier la valeur de débit (V1) d'un montant (M),
   - calcul d'une nouvelle valeur de débit (V1') en modifiant la valeur de débit (V1) par le montant (M),
   - expression de la modification de la nouvelle valeur de débit (V1') par rapport à la valeur de débit (V1) selon une fonction prédéfinie, pour arriver à un nombre entier non négatif de pas (N),
   - si le nombre de pas (N) est non nul, calcul d'une nouvelle valeur de contrôle (CT') remplaçant la valeur de contrôle (CT) en appliquant au moins une fonction unidirectionnelle à ladite valeur de contrôle (CT) un nombre de fois égale au nombre de pas (N).

2. Méthode selon la revendication 1, dans laquelle le dispositif à prépaiement représente une valeur initiale de crédit (V0), ladite valeur initiale de crédit étant divisée en une pluralité d'intervalles, le nombre de pas (N) étant déterminé par le nombre d'intervalles entamés par la modification de la valeur de débit (V1).

3. Méthode selon la revendication 1 ou 2, dans laquelle la fonction est une division entre la valeur de débit (V1) et la nouvelle valeur de débit (V1') par une granularité (G) qui représente une valeur pour un pas, le nombre de pas N étant calculé selon la formule :

   N = V1'/G - V1/G, le résultat de chaque division ne conservant que la partie entière.

4. Méthode selon la revendication 2, dans laquelle le dispositif à prépaiement comprend une valeur de reste (R) et une granularité (G) qui représente une valeur pour un pas, le nombre de pas (N) étant calculé :

   N = (M+R) / G ; le résultat de la division ne conservant que la partie entière, le reste étant mémorisé comme nouvelle valeur de reste (R).

5. Méthode selon la revendication 3, dans laquelle le résultat de la division V1'/G est stocké avec la nouvelle valeur (V1') pour éviter de devoir refaire un calcul lors de la prochaine requête pour modifier la valeur de débit.

6. Méthode de gestion d'une date (D1) dans un dispositif à prépaiement comprenant un identifiant (UA) propre à chaque dispositif et une deuxième valeur de contrôle (CTD) correspondant à une date initiale (D0), cette méthode comprenant les étapes suivantes :

   - réception d'une requête pour modifier la date (D1) en une nouvelle date (D1'),
   - expression de la modification de la date (D1) par rapport à la nouvelle date (D1') selon une fonction prédéfinie, pour arriver à un deuxième nombre entier non négatif de pas (P),
   - modification de la valeur de contrôle (CTD) en appliquant une fonction unidirectionnelle à ladite deuxième valeur de contrôle (CTD) un nombre de fois égal au deuxième nombre de pas (P).

7. Dispositif à prépaiement comprenant un identifiant unique (UA) et une valeur de débit (V1), des moyens pour modifier la valeur de débit (V1) selon un montant (M) pour obtenir une nouvelle valeur de débit (V1'), le dispositif à prépaiement étant **caractérisé en ce qu'**il comprend de surcroît :

   une valeur spécifique de contrôle (CT),
   des moyens de calcul pour exprimer la modification de la nouvelle valeur de débit (V1') par rapport à la valeur de débit (V1) selon une fonction prédéfini pour obtenir une nombre entier non négatif de pas (N), et
   des moyens de contrôle pour modifier la valeur de contrôle (CT) en exécutant au moins une fonction unidirectionnelle sur ladite valeur de contrôle (CT) un nombre de fois égal au nombre de pas (N) quand le nombre de pas (N) est non nul.

8. Dispositif à prépaiement selon la revendication 7, **caractérisé en ce que** le dispositif à prépaiement représente une valeur initiale de crédit (V0), ladite valeur initiale de crédit étant divisée en une pluralité d'intervalles, le nombre de pas (N) étant calculé selon le nombre d'intervalles entamés par la modification de la valeur de débit (V1).

9. Dispositif à prépaiement selon les revendications 7 ou 8, **caractérisé en ce que** la fonction est une division entre la valeur de débit (V1) et la nouvelle valeur de débit (V1') par une granularité (G) qui représente une valeur pour un pas, le nombre de pas N étant calculé selon la formule :

N = V1'/G - V1/G, le résultat de chaque division ne conservant que la partie entière.

10. Dispositif à prépaiement selon la revendication 8, **caractérisé en ce que** le dispositif à prépaiement comprend une valeur de reste (R) et une granularité (G) qui représente une valeur pour un pas, le nombre de pas (N) étant calculé :

N = (M+R) / G ; le résultat de la division ne conservant que la partie entière, le reste étant mémorisé comme nouvelle valeur de reste (R).

Fig. 1

BC

ECM

STB

PD

{ UA
CT
V1

**Fig. 2**

VC

DB

**EP 2 344 995 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 03085959 A